# EUROPÄISCHE PATENTSCHRIFT

(11) **EP 1 816 837 B1**
(45) Veröffentlichungstag und Bekanntmachung des Hinweises auf die Patenterteilung: **01.09.2010**
(21) Anmeldenummer: 07002317.1
(22) Anmeldetag: 02.02.2007
(51) Int. Cl.: H04M 1/725, H04M 1/247, G07F 7/10

(54) **Chipkarte zur kommunikation mit einer Teilnehmerstation und beinhaltend ein Verwaltungsprogramm für mehrere in der Karte gespeicherte Applikationsprogramme**
IC card communicating with a terminal and comprising an administration program for a plurality of application programs stored in said card
Carte à puce communiquant avec un terminal et comprenant un programme pour administrer plusieurs programmes d'applications stokés dans cette carte

(30) Priorität: 03.02.2006 DE 102006005075
(43) Veröffentlichungstag der Anmeldung: 08.08.2007
(73) Patentinhaber: Giesecke & Devrient GmbH, 81677 München (DE)
(72) Erfinder: Huber, Ulrich, 88161 Lindenberg (DE); Maras, Christian, 80636 München (DE); Schneider, Olaf, 80799 München (DE)
(74) Vertreter: Höhfeld, Jochen

(56) Entgegenhaltungen:
- WO-A-00/76239
- WO-A-2006/010371
- US-A1- 2003 144 830
- US-A1- 2003 174 839

## Beschreibung

Die Erfindung betrifft einen tragbaren Datenträger, insbesondere eine Chipkarte in Form einer SIM-Karte für mobile Telekommunikationsendgeräte, auf der mehrere Applikationen gespeichert sind, die von einer externen Teilnehmerstation, also insbesondere von dem mobilen Telekommunikationsendgerät, durch einen Benutzer aufgerufen werden können. Die Erfindung betrifft desweiteren ein System umfassend den tragbaren Datenträger und die Teilnehmerstation.

Aus der EP 0 399 360 B1 ist es bekannt, Informationen in Form von Texten und Sprache, wie sie z. B. in Fernsprechteilnehmerstationen und Geldausgabeautomaten (ATM) ausgegeben werden, in einem Speicher der Teilnehmerstation/ des Geldausgabeautomaten in mehreren Sprachen zu hinterlegen. Der Benutzer kann durch entsprechende Menüführung eine Sprache auswählen, in der dann das Procedere durchgeführt wird. Um den Bedienkomfort zu erhöhen, wird in der EP 0 399 360 B1 vorgeschlagen, bei solchen Terminals, die eine Leseeinrichtung für Chipkarten aufweisen, die Sprachauswahl automatisch durchzuführen. Dazu sind auf der Chipkarte Informationen betreffend die von dem Chipkartenbenutzer bevorzugte(n) Sprache(n) hinterlegt, die bei Einführung der Chipkarte in die Leseeinrichtung von dieser ausgelesen und beim Aufrufen und Anzeigen der Textinformationen entsprechend berücksichtigt wird. Die bevorzugte(n) Sprache(n) kann sich der Benutzer von der kartenausgebenden Stelle in der von ihm gewünschten Reihenfolge in den Chip der Chipkarte kodieren lassen.

In entsprechender Weise wird heutzutage die in Handy-Displays genutzte Menüsprache durch die in das Handy eingesetzte SIM-Karte festgelegt, wobei wiederum die wesentlichen Applikationen und Textinformationen in den unterschiedlichen Sprachen im Telekommunikationsendgerät selbst gespeichert und aufrufbar sind.

US-A-2003/144830 offenbart ein System zur Eingabe von textueller Sprache in ein Handy. Vorgeschlagen wird, eine SIM-Karte mit einer API auszurüsten, die es erlaubt, sprachbezogene Verarbeitungsschritte auszuführen, so daß bei gleicher Handysoftware unterschiedliche Eingabemöglichkeiten bestehen. Das vorgeschlagene Modul versucht etwa, chinesische Schriftzeichen zu erkennen und bietet in Frage kommende Zeichenvorschläge an, die der Nutzer auswählen kann. Zur Realisierung des Vorschlages ist ein Sprachmodul vorgesehen, das die textuellen Eingaben aus unterschiedlichen Sprachen jeweils für die auf dem Handy vorhandenen Anwendungen umsetzt.

Mit zunehmender Speicherkapazität der Chipkartenchips geht eine Tendenz dahin, individuelle Applikationen - die im Sinne der vorliegenden Erfindung auch solche Applikationen umfassen können, welche lediglich der Anzeige von Textinformation dienen - auf der SIM-Karte zu speichern. In Betracht kommen insbesondere benutzerspezifische Applikationen, wie z. B. ein Paßwort-Safe, der alle möglichen Paßwörter und PINs des Karteninhabers speichert und dem Benutzer auf Anfrage ausgibt, oder bestimmte von dem Karteninhaber präferierte Spiele. Mit Blick auf die arabische Welt können auch persönliche religionsbasierte Applikationen auf die Karte aufgespielt werden. Alle diese Applikationen werden bezüglich der Sprache redundant, d.h. jede Applikation unterstützt unterschiedliche Sprachen, gespeichert und sind zunächst in einer voreingestellten Sprache aufrufbar. Wenn die voreingestellte Sprache z. B. Deutsch ist, wird allerdings die Applikation auch dann in Deutsch aufgerufen, wenn für das Telekommunikationsendgerät eine andere Menüsprache festgelegt ist. Über die Menüführung des Telekommunikationsendgeräts kann der Benutzer dann jede Applikation auf eine ihm genehme Sprache umschalten. Dies ist umständlich, da der Benutzer jede Applikation für sich umschalten muss.

Aus der WO 00/76239 A1 ist eine IC-Karte für Handys bekannt, die nach dem Einsetzen in ein Handy sämtliche Handy-Anwendungen, die beim letzen Einschalten auf dem Handy aktiviert waren, wieder aktiviert. Die Karte speichert dazu den Status aller aktivierten Anwendungen. Aktivierung und Einstellung der Funktionalität der Anwendungen erfolgen einzeln während des normalen Handy-Gebrauchs. Die durch die Karte verwaltbaren Anwendungen können auch insgesamt angezeigt und manuell einzeln zur Aktivierung ausgewählt werden. Die Lösung erspart einem Nutzer das wiederholte Aktivieren und Einstellen von Anwendungen bei jeder Inbetriebnahme des Handys.

Aus der US-A-2003/174839 ist eine IC-Karte mit einer hierarchischen Speicherstruktur bekannt, in der jedem Directory und jeder Applikation ein eigenes Paßwort zugewiesen ist. Damit ein Nutzer bei der Nutzung einer solchen Karte nicht wiederholt Paßwörter eingeben muß, wird vorgeschlagen, den Zugriff auf alle jeweils untergeordneten Directorys und Applikationen freizugeben, wenn für die übergeordnete Applikation bzw. das übergeordnete Directory ein gültiges Paßwort präsentiert wurde. Die Zuweisung von Paßwörtern zu den Directorys bzw. den Applikation erfolgt menügesteuert manuell in einem Vorbereitungsschritt.

Aus der WO 2006/01371 A2 ist ein Handy mit einer SIM-Karte bekannt, auf die mit dem SIM Application Toolkit-Protokoll zugegriffen werden kann. Vorgeschlagen wird, in dem Handy zusätzlich ein SIM-Gateway-Modul zu installieren, das es auf dem Handy laufenden Anwendungen ermöglicht, mit der SIM-Karte zu kommunizieren, indem das Gateway-Modul für die Anwendungen ein SIM-Application Toolkit-Protokoll emuliert.

Aufgabe der vorliegenden Erfindung ist es, Maßnahmen vorzuschlagen, wie die Menüführung in einem System erleichtert werden kann, welches eine Chipkarte mit mehreren darauf in unterschiedlicher Sprache gespeicherten Applikationen und eine mit der Chipkarte kommunizierende Teilnehmerstation umfasst, dies insbesondere im Hinblick auf die Sprachauswahl in einem mobilen Telekommunikationsendgerät.

Diese Aufgabe wird durch eine Chipkarte bzw. ein die Chipkarte und eine mit der Chipkarte kommunizierende Teilnehmerstation umfassendes System gemäß den Merkmalen der nebengeordneten Ansprüche gelöst. In davon abhängigen Ansprüchen sind vorteilhafte Ausgestaltungen und Weiterbildungen der Erfindung angegeben.

Erfindungsgemäß wird ein Applikationsverwaltungsprogramm auf der Chipkarte vorgesehen, welches von einem Benutzer über die Menüführung der Teilnehmerstation aufrufbar ist. Das Applikationsverwaltungsprogramm stellt der Teilnehmerstation Menüführungsinformationen in einer Weise zur Verfügung, die es der Teilnehmerstation erlaubt, diese Informationen dem Benutzer mitzuteilen, also insbesondere auf einem Display der Teilnehmerstation zu visualisieren. Die Menüführungsinformationen können aber auch oder zusätzlich durch Sprachausgabe mitgeteilt werden.

Die dem Benutzer auf diese Weise mitgeteilten Menüführungsinformationen betreffen zumindest auch die Funktionalitäten der in dem Speicher gespeicherten Applikationen derart, daß dem Benutzer eine Möglichkeit eröffnet wird, die Funktionalität einer oder mehrer dieser Applikationen zu verändern.

Das Applikationsverwaltungsprogramm besitzt desweiteren ein API (Application Programm Interface), über das es die Funktionalitäten der Applikationen entsprechend der vom Benutzer eingegebenen Daten ändern kann. Die Applikationen müssen dann gegebenenfalls über eine entsprechende API verfügen, um eine solche Änderung zu ermöglichen.

Der Benutzer hat dadurch eine einfache und bequeme Möglichkeit, für die Applikationen die gewünschte Funktionalität, insbesondere Sprache, einzustellen. Ein Durchklicken durch alle vorhandenen Applikationen und Suchen des entsprechenden Menüpunktes in jeder Applikation entfällt. Ein besonderer Vorteil der Erfindung besteht auch darin, daß die auf der Chipkarte eingestellten Funktionalitäten unabhängig sind von der externen Teilnehmerstation, mit der die Chipkarte kommuniziert. So kann der Benutzer beispielsweise eine SIM-Karte in jedes beliebige Handy einsetzen, ohne erneut die Funktionalitäten der Applikationen entsprechend umzustellen. Auch der Netzbetreiber kann, beispielsweise über die Funkschnittstelle via SMS oder über ein Point of Sales (POS)-Terminal durch die zentrale Verwaltung eine Konfiguration einfach vornehmen und z. B. eine Applikation auswählen, Spracheinstellungen vornehmen oder eine weitere Sprache hinzufügen.

So kann das Applikationsverwaltungsprogramm z. B. eingerichtet sein, auf dem Display des Teilnehmergeräts eine oder mehrere der folgenden Optionen zu wählen:
- von einer fest vorgegebenen Gruppe von auf der Chipkarte gespeicherten Applikationen A₁ ... An sollen alle auf die Sprache Sₘ umgeschaltet werden,
- eine in einem nachfolgenden Schritt noch näher zu definierende Auswahl der auf der Chipkarte gespeicherten Applikationen A₁... An soll auf eine Sprache Sₘ umgeschaltet werden,
- eine konkrete noch näher zu bestimmende Applikation der auf der Chipkarte gespeicherten Applikationen A₁... An soll auf eine Sprache Sₘ umgeschaltet werden.

Die Auswahl der Funktionalität (z. B. Sprache) kann vor oder nach der Auswahl der betreffenden Applikationen erfolgen. Zweckmäßig kann es auch sein, wenn gleichzeitig Informationen betreffend die aktuell für die Applikationen eingestellten Funktionalitäten auf dem Menü angezeigt werden, was ebenfalls durch das Applikationsverwaltungsprogramm erfolgen kann.

Anstatt mittels des Applikationsverwaltungsprogramms die Spracheinstellung der auf der Chipkarte gespeicherten Applikationen zu verwalten oder zusätzlich zu dieser Variante, kann das Applikationsverwaltungsprogramm auch zur Änderung anderer Funktionalitäten der Applikationen eingesetzt werden. Beispielsweise kann eine PIN für alle Applikationen oder für eine ausgewählte Gruppe von Applikationen gemeinsam oder im Bedarfsfall auch für jede einzelne Applikation separat eingestellt werden.

Selbstverständlich können in dem Applikationsverwaltungsprogramm noch weitere Verwaltungsaufgaben implementiert sein, die mit den auf der Chipkarte gespeicherten Applikationen nicht in unmittelbarem Zusammenhang stehen, beispielsweise die Möglichkeit, die aktuelle Menüsprache der Teilnehmerstation auszuwählen, und dergleichen mehr.

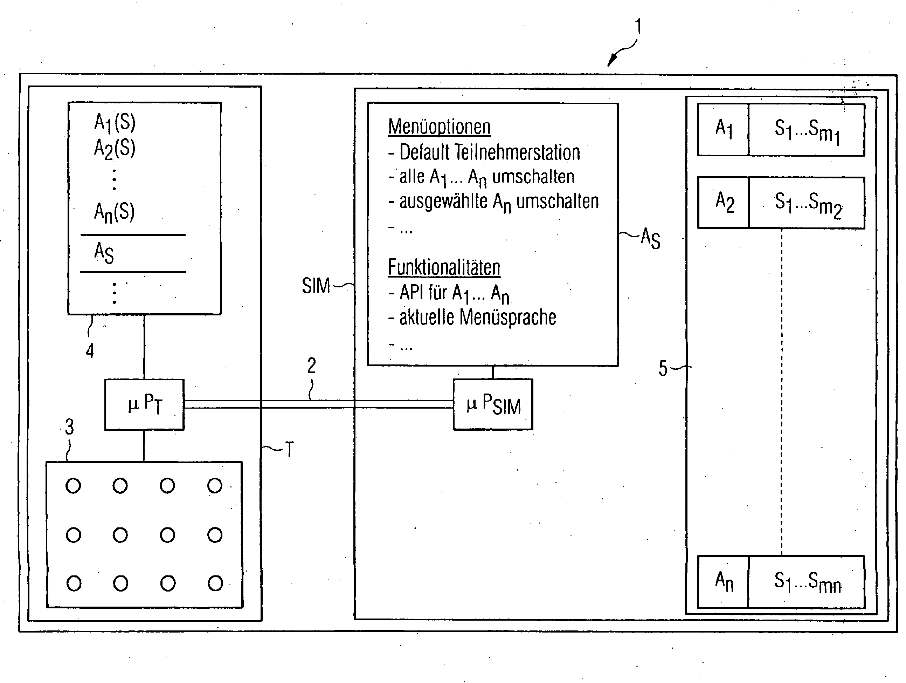

Nachfolgend wird die Erfindung anhand der Figur 1 beschrieben, welche ein konkretes Ausführungsbeispiel der Erfindung betrifft.

In dem Ausführungsbeispiel gemäß Figur 1 ist die Teilnehmerstation T als mobiles Telekommunikationsendgerät in Form eines Handys ausgeführt, und bei der Chipkarte SIM handelt es sich um eine SIM-Karte, welche in das Telekommunikationsendgerät T einsetzbar ist und über eine Schnittstelle 2 mit diesem kommuniziert Die Chipkarte kann auch von einem anderem Typ sein, insbesondere etwa eine USIM-Karte für UMTS-Netze; die Teilnehmerstation kann auch eine gänzlich andere Bauformen besitzen, etwa die eines Point of Sales(POS)-Terminals zur Ausführung von kartengestützten Zahlungen an Kassen. Die Schnittstelle 2 kann eine Kontaktschnittstelle und/oder eine kontaktlose, insbesondere eine Dual-Interface-Schnittstelle, sein.

Das Telekommunikationsendgerät T umfaßt eine Tastatur 3 und ein Display 4, welche beide an einen Mikroprozessor µP_{T} gekoppelt sind. Die Menüanzeige auf dem Display 4 ermöglicht es dem Benutzer, zwischen verschiedenen Applikationen zu wählen. Hier von Interesse sind die Applikationen A₁ bis An, bei denen es sich um auf der SIM-Karte gespeicherte Applikationen handelt, und die davon verschiedene Applikation As, die ebenfalls auf der SIM-Karte gespeichert ist und mittels der diese Applikationen A₁ ... An verwaltet werden können.

Bei Auswahl einer der Applikationen A₁ bis An ruft das Telekommunikationsendgerät T über seinen Mikroprozessor µP_{T} und dem Mikroprozessor µP_{SIM} der SIM-Karte die entsprechende Applikation aus dem Speicher 5 der SIM-Karte auf, der vorzugsweise ein nichtflüchtiger wiederbeschreibbarer Speicher, insbesondere ein EEPROM ist. Die ausgewählte Applikation wird dann zunächst in der aktuell eingestellten Sprache S ausgeführt.

Wenn nun der Benutzer die Sprache der Applikation ändern möchte, kann er über den Menüpunkt As ein Benutzerverwaltungsprogramm As aufrufen. Dies eröffnet insbesondere auch die Möglichkeit, statt einer einzelnen Applikation die Sprache für eine Gruppe oder alle Applikationen gleichzeitig auf ein und dieselbe ausgewählte Sprache umzuschalten. Dazu sind die Applikationen A₁ und An in dem Speicher 5 der SIM-Karte jeweils in unterschiedliche Sprachen unterstützenden Versionen S₁ bis Sₘ₁, S₁ bis Sₘ₂ ... S₁ bis Sₘₙ abgelegt. Die Sprachen müssen nicht für alle Applikationen übereinstimmen. Abhängig von der Sprachversion, auf die die Applikation geschaltet wird, wird eine konkrete Startadresse eingestellt, an der das Auslesen der Applikation beginnt, wenn sie vom Benutzer aufgerufen wird. Diese Startadresse kann beispielsweise als Index-Wert an der ersten Speicheradresse des Speicherbereichs abgelegt werden, in dem die betreffende Applikation gespeichert ist. Dadurch wird bei Aufruf der Applikation ohne Umwege die eingestellte Sprachversion aufgerufen.

Alternativ kann der Index-Wert zu jeder Applikation auch im Verwaltungsprogramm As abgelegt sein. Dies hat aber den Nachteil, daß bei Aufruf einer Applikation immer auch das Verwaltungsprogramm As aufgerufen werden muss, um den Index-Wert abzurufen, der zum Aufrufen der Applikation in der eingestellten Sprachversion benötigt wird.

Wenn nun der Benutzer das Verwaltungsprogramm As aufruft, so liefert das Verwaltungsprogramm As zunächst Menüführungsinformationen, die auf dem Display angezeigt werden. Alternativ oder ergänzend ist auch eine Menüführung per Sprache möglich. Dem Benutzer werden dann verschiedene Menüoptionen angezeigt, die hier, da es sich bei dem konkreten Ausführungsbeispiel um ein reines Sprachenverwaltungsprogramm handelt, z. B. die folgenden Auswahloptionen für den Benutzer bieten:
- Default-Einstellung für die von der Teilnehmerstation benutzte Sprache S,
- Umschalten aller Applikationen A₁ bis An auf eine gemeinsame Sprache S,
- Umschalten auszuwählender Applikationen auf eine gemeinsame Sprache S,
- Zurücksetzen auf Ausgangseinstellung bei Auslieferung.

In den entsprechenden Untermenüs kann der Benutzer dann die Sprache und die entsprechenden Applikationen angeben.

In entsprechender Weise könnten auch den Applikationen zugeordnete Sicherheitscodes verwaltet werden, die zur Ausführung der Applikationen verifiziert werden müssen.

Hat der Benutzer die Sprache und die entsprechenden Applikationen ausgewählt, so veranlasst das Verwaltungsprogramm As eine entsprechende Änderung der die zugehörigen Startadressen angebenden Index-Werte. Nach diesem Vorgang bleiben die Sprachen beim Aus- und Wiedereinschalten erhalten. Ebenso bleiben die Sprachen in der gewünschten Weise eingestellt, wenn die SIM-Karte dem Telekommunikationsendgerät entnommen und in ein anderes Telekommunikationsendgerät eingesetzt wird. Die Auswahl einer Option zur Ansteuerung des Verwaltungsprogramms As kann auch ohne aktives Eingreifen erfolgen, etwa durch Übertragung entsprechender Steuerdaten an das benutzte Telekommunikationsgerät über eine Funkschnittstelle. Die Auswahl kann so auch zum Beispiel durch einen Netzbetreiber zentral erfolgen.

## Patentansprüche

1. Chipkarte (SIM) umfassend eine Schnittstelle (2) zur Kommunikation mit einer externen Teilnehmerstation (T), eine mit der Schnittstelle (2) gekoppelte Mikroprozessoreinrichtung (µP_{Sim}) und einen mit der Mikroprozessoreinrichtung verknüpften, nichtflüchtigen Speicher (5) zur Speicherung von mehreren über die Schnittstelle (2) zugreifbaren Applikationen (A₁... Aₙ), deren Funktionalität (S₁... Sₘ) zumindest betreffend die Sprache, in der die sie ausführbar sind, und/ oder einen Sicherheitscode, der zur Ausführung verifiziert werden muß, jeweils veränderbar ist,
**dadurch gekennzeichnet,**
**daß** auf der Chipkarte (SIM) ein von solchen Applikationen (A₁... An) verschiedenes Applikationsverwaltungsprogramm (As) vorgesehen ist, welches über die Mikroprozessoreinrichtung aufrufbar und bei Aufruf eingerichtet ist, Menüführungsinformationen zur Ausgabe durch eine externe Teilnehmerstation (T) zur Verfügung zu stellen, die zur Angabe von Eingabeoptionen dienen, um die Funktionalität einer Gruppe von im Speicher gespeicherten Applikationen (A₁... An) in derselben Weise zu verändern, wobei das Applikationsverwaltungsprogramm (As) weiter eingerichtet ist, bei Empfang von Eingabedaten über die Schnittstelle (2), die einer solchen Eingabeoption entsprechen, die Funktionalitäten (S₁... Sₘ) dieser Gruppe von Applikationen entsprechend in derselben Weise zu verändern.

2. Chipkarte nach Anspruch 1, **dadurch gekennzeichnet, daß** die Menüführungsinformationen zur Angabe von Eingabeoptionen an der Teilnehmerstation (T) dienen, um die Funktionalität einer auszuwählenden Applikation oder einer auszuwählenden Gruppe von Applikationen von in dem Speicher gespeicherten Applikationen (A1 ... An) in einer bestimmten Weise zu verändern, und daß das Applikationsverwaltungsprogramm (AS) eingerichtet ist, bei Empfang von Eingabedaten, die einer dieser Eingabeoptionen entsprechen, die Funktionalitäten dieser ausgewählten Applikation oder dieser ausgewählten Gruppe von Applikationen entsprechend zu verändern.

3. Chipkarte nach einem der Ansprüche 1 oder 2, dadurch gekennzeich-net, daß die Funktionalität (S1 ... Sm) die Sprache betrifft, in der die Applika-tionen (A1... An) ausführbar sind.

4. Chipkarte nach Anspruch 1, **dadurch gekennzeichnet, daß** in dem Speicher (5) mehrere Applikationen (A1 ... An) jeweils in mehreren Ausführungssprachen (S1 ... Sm1, S1 ... Sm2, S1 ... Smn) abgespeichert sind.

5. Chipkarte nach Anspruch 4, **dadurch gekennzeichnet, daß** die Applikationen (A1 ... An) einen an das Applikationsverwaltungsprogramm (AS) angepaßten Programmcode (API) enthalten, um mittels des Applikationsverwaltungsprogramms (AS) in ihrer Funktionalität (S1 ... Sm) verändert werden zu können.

6. Chipkarte nach einem der Ansprüche 1 bis 5, **dadurch gekennzeichnet, daß** die Funktionalität (S1 ... Sm) einen Sicherheitscode betrifft, der zur Ausführung der Applikationen verifiziert werden muss.

7. Chipkarte nach einem der Ansprüche 1 bis 5, **dadurch gekennzeichnet, daß** die Chipkarte eine SIM-Karte ist.

8. System (1) umfassend eine Chipkarte (SIM) nach einem der Ansprüche 1 bis 7 und eine Teilnehmerstation (T), welche eine Schnittstelle zur Kommunikation mit der Schnittstelle (2) der Chipkarte SIM, einen Mikroprozessor (µPT) zur Kommunikation mit dem Mikroprozessor (µPSIM) der Chipkarte (SIM) über die gemeinsame Schnittstelle (2) sowie eine Eingabeeinrichtung (3) und eine Ausgabeeinrichtung (4), die jeweils mit dem Mikroprozessor (µPT) der Teilnehmerstation (T) verknüpft sind, umfasst.

9. System nach Anspruch 8, **dadurch gekennzeichnet, daß** die Eingabeeinrichtung (3) eine Tastatur ist.

10. System nach Anspruch 8 oder 9, **dadurch gekennzeichnet, daß** die Ausgabeeinrichtung (4) ein Display ist.

11. System nach einem der Ansprüche 8 bis 10, **dadurch gekennzeichnet, daß** die Teilnehmerstation (T) ein mobiles Telekommunikationsendgerät ist.

12. System nach einem der Ansprüche 8 bis 11, **dadurch gekennzeichnet, daß** die Teilnehmerstation (T) dazu eingerichtet ist, Eingabedaten an das Applikationsverwaltungsprogramm (AS) zu leiten, die ihr über eine Funkschnittstelle zugesandt wurden.

13. System nach einem der Ansprüche 8 bis 12, **dadurch gekennzeichnet, daß** die Teilnehmerstation (T) ein Kassenterminal zur Ausführung von kartengestützten Zahlungen ist.

## Claims

1. A chip card (SIM) comprising an interface (2) for communication with an external subscriber station (T), a microprocessor device (µP_{Sim}) coupled with the interface (2), and a non-volatile memory (5) linked with the microprocessor device for storing a plurality of applications (A₁... An) accessible via the interface (2) and whose functionality (S₁... Sₘ), at least relating to the language in which they are executable and/or to a security code which must be verified for execution, is changeable in each case, **characterized in that**
on the chip card (SIM) there is provided an application management program (As) different from such applications (A₁... An) which is callable via the microprocessor device and, when called, set up to make available menu navigation information to be outputted through an external subscriber station (T) and serving to state input options in order to change in the same manner the functionality of a group of applications (A₁... An) stored in the memory, wherein the application management program (As) is further set up to change accordingly in the same manner the functionalities (S₁... Sₘ) of said group of applications upon receiving input data corresponding to such an input option via the interface (2).

2. The chip card according to claim 1, **characterized in that** the menu navigation information serves to state input options at the subscriber station (T) in order to change in a certain manner the functionality of an application to be selected or of a group of applications to be selected from applications (A1 ... An) stored in the memory, and that the application management program (AS) is set up to change accordingly the functionalities of said selected application or said selected group of applications upon receiving input data corresponding to one of said input options.

3. The chip card according to either of claims 1 and 2, **characterized in that** the functionality (S1 ... Sm) relates to the language in which the applications (A1 ... An) are executable.

4. The chip card according to claim 1, **characterized in that** in the memory (5) there are stored a plurality of applications (A1 ... An) each in a plurality of execution languages (S1 ... Sm1, S1... Sm2, S1.... Smn).

5. The chip card according to claim 4, **characterized in that** the applications (A1 .. An) contain a program code (API) adapted to the application management program (AS) in order to be able to be changed in their functionality (S1.... Sm) by means of the application management program (AS).

6. The chip card according to any of claims 1 to 5, **characterized in that** the functionality (S1 ... Sm) relates to a security code which must be verified for execution of the applications.

7. The chip card according to any of claims 1 to 5, **characterized in that** the chip card is a SIM card.

8. A system (1) comprising a chip card (SIM) according to any of claims 1 to 7 and a subscriber station (T) which comprises an interface for communication with the interface (2) of the chip card SIM, a microprocessor (µPT) for communication with the microprocessor (µPSIM) of the chip card (SIM) via the common interface (2) as well as an input device (3) and an output device (4) which are in each case linked with the microprocessor (µPT) of the subscriber station (T).

9. The system according to claim 8, **characterized in that** the input device (3) is a keyboard.

10. The system according to claim 8 or 9, **characterized in that** the output device (4) is a display.

11. The system according to any of claims 8 to 10, **characterized in that** the subscriber station (T) is a mobile telecommunication terminal.

12. The system according to any of claims 8 to 11, **characterized in that** the subscriber station (T) is set up to pass input data to the application management program (AS) which have been sent thereto via a radio interface.

13. The system according to any of claims 8 to 12, **characterized in that** the subscriber station (T) is a point-of-sale terminal for making card-based payments.

## Revendications

1. Carte à puce (SIM) comprenant une interface (2) pour la communication avec une station externe d'abonné (T), un dispositif de microprocesseur (µP_{Sim}) couplé à l'interface (2) et une mémoire (5) non volatile reliée avec le dispositif de microprocesseur pour la mémorisation de plusieurs applications (A₁... Aₙ) qui sont accessibles par l'intermédiaire de l'interface (2) et dont la fonctionnalité (S₁... \Sₘ) est respectivement modifiable au moins en ce qui concerne la langue dans laquelle elles sont exécutables et/ou en ce qui concerne un code sécurité devant être vérifié pour l'exécution, **caractérisée en ce**
**qu'**un programme de gestion d'application (As) différent de telles applications (A₁... Aₙ) est prévu sur la carte à puce (SIM), ce dernier étant appelable par l'intermédiaire du dispositif de microprocesseur et étant configuré en cas d'appel pour mettre à disposition, pour délivrance par une station externe d'abonné (T), des informations de guidage par menu qui servent à l'indication d'options d'entrée afin de modifier de la même façon la fonctionnalité d'un groupe d'applications (A₁... Aₙ) stockées dans la mémoire,
le programme de gestion d'application (As) étant en outre configuré pour modifier les fonctionnalités (S₁... Sₘ) de ce groupe d'applications de la même façon de manière correspondante en cas de réception par l'intermédiaire de l'interface (2) de données d'entrée qui correspondent à une telle option d'entrée.

2. Carte à puce selon la revendication 1, **caractérisée en ce que** les informations de guidage par menu servent à l'indication d'options d'entrée à la station d'abonné (T), afin de modifier d'une façon déterminée la fonctionnalité d'une application à sélectionner ou d'un groupe d'applications à sélectionner d'applications (A₁... Aₙ) stockées dans la mémoire, et **en ce que** le programme de gestion d'application (AS) est configuré pour modifier de manière correspondante les fonctionnalités de cette application sélectionnée ou de ce groupe sélectionné d'applications en cas de réception de données d'entrée qui correspondent à une de ces options d'entrée.

3. Carte à puce selon une des revendications 1 ou 2, **caractérisée en ce que** la fonctionnalité (S1 ... Sm) concerne la langue dans laquelle les applications (A1 ... An) sont exécutables.

4. Carte à puce selon la revendication 1, **caractérisée en ce que** plusieurs applications (A1 ... An) sont stockées respectivement en plusieurs langues d'exécution (S1 ... Sm1, S1 ... Sm2, S1 ... Smn) dans la mémoire (5).

5. Carte à puce selon la revendication 4, **caractérisée en ce que** les applications (A1 ... An) contiennent un code programme (API) adapté au programme de gestion d'application (AS) afin de pouvoir être modifiées dans leur fonctionnalité (S1 ... Sm) au moyen du programme de gestion d'application (AS).

6. Carte à puce selon une des revendications de 1 à 5, **caractérisée en ce que** la fonctionnalité (S1 ... Sm) concerne un code sécurité qui doit être vérifié pour l'exécution des applications.

7. Carte à puce selon une des revendications de 1 à 5, **caractérisée en ce que** la carte à puce est une carte SIM.

8. Système (1) comprenant une carte à puce (SIM) selon une des revendications de 1 à 7, et une station d'abonné (T) qui comprend une interface pour la communication avec l'interface (2) de la carte à puce SIM, un microprocesseur (µPT) pour la communication avec le microprocesseur (µPSIM) de la carte à puce (SIM) par l'intermédiaire de l'interface commune (2), ainsi qu'un dispositif d'entrée (3) et un dispositif de sortie (4) qui sont respectivement reliés au microprocesseur (µPT) de la station d'abonné (T).

9. Système selon la revendication 8, **caractérisé en ce que** le dispositif d'entrée (3) est un clavier.

10. Système selon la revendication 8 ou 9, **caractérisé en ce que** le dispositif de sortie (4) est une unité d'affichage.

11. Système selon une des revendications de 8 à 10, **caractérisé en ce que** la station d'abonné (T) est un terminal de télécommunication mobile.

12. Système selon une des revendications de 8 à 11, **caractérisé en ce que** la station d'abonné (T) est configurée pour transmettre au programme de gestion d'application (AS) des données d'entrée qui lui ont été envoyées par l'intermédiaire d'une interface radio.

13. Système selon une des revendications de 8 à 12, **caractérisé en ce que** la station d'abonné (T) est un terminal de caisse destiné à l'exécution de paiements par carte.
